# FASCICULE DE BREVET EUROPEEN

(11) **EP 3 124 226 B1**
(45) Date de publication et mention de la délivrance du brevet: **18.04.2018**
(21) Numéro de dépôt: 16181198.9
(22) Date de dépôt: 26.07.2016
(51) Int. Cl.: B32B 7/06, B32B 7/12, B32B 3/02

(54) **CALE PELABLE AVEC DES LANGUETTES D'AIDE A L'ARRACHAGE**
ABZIEHBARE ZWISCHENLAGE MIT ZUNGEN ALS ABZIEHHILFE
PEELABLE SHIM WITH TABS FOR TEARING ASSISTANCE

(30) Priorité: 31.07.2015 FR 1557366
(43) Date de publication de la demande: 01.02.2017
(73) Titulaire: Airbus SAS, 31700 Blagnac (FR); Airbus Operations (S.A.S.), 31060 Toulouse Cedex 9 (FR)
(72) Inventeur: MILLET, Gérard, 31820 PIBRAC (FR); DIAS, Charles, 31700 BLAGNAC (FR); GUGLIELMO, Philippe, 31700 BLAGNAC (FR)
(74) Mandataire: Le Guen-Maillet

(56) Documents cités:
- EP-A1- 2 327 541
- WO-A1-03/049591
- WO-A1-2014/197344
- US-A- 5 608 578
- US-A1- 2012 137 414

## Description

### DOMAINE TECHNIQUE

La présente invention concerne une cale pelable qui est constituée de plusieurs feuilles empilées et collées les unes sur les autres et dont certaines d'entre elles comportent également une languette d'aide à l'arrachage qui est prévue pour faciliter la prise en main de la feuille lors de son arrachage.

### ETAT DE LA TECHNIQUE ANTERIEURE

Une cale pelable est une cale qui comporte un empilement de feuilles collées les unes sur les autres. En arrachant un certain nombre de feuilles, il est possible d'ajuster l'épaisseur de la cale pelable et ainsi obtenir facilement une cale d'épaisseur voulue.

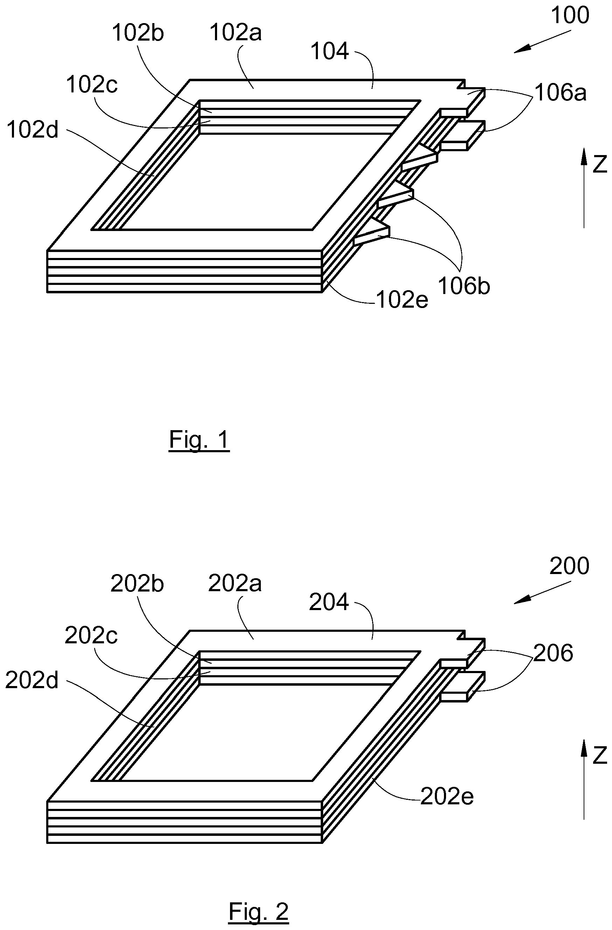

L'arrachage de chaque feuille s'effectue par l'introduction d'un outil, comme par exemple une lame de cutter, sous la feuille à arracher. Une telle introduction présente un risque pour l'opérateur qui peut se blesser, et un risque pour la feuille juste au-dessous qui peut être abîmée.
EP 2 327 541 A1 décrit une cale d'épaisseur comprenant plusieurs feuilles de métal séparées l'une de l'autre par un film de résine qui confère à la cale certaines propriétés mécaniques. Les figures 2,3 et 4 montrent une cale dont un extrémité est scindée en 2 dans le sens de la hauteur, permettant l'obtention d'une patte d'accroche.

### EXPOSE DE L'INVENTION

Un objet de la présente invention est de proposer une cale pelable qui ne présente pas les inconvénients de l'art antérieur et qui en particulier permet de faciliter l'arrachage de certaines feuilles sans risque pour l'opérateur ou pour les feuilles restantes.

A cet effet, est proposée une cale pelable constituée d'un empilement de plusieurs feuilles selon une direction d'empilement, chaque feuille comportant une partie commune où les parties communes sont collées les unes sur les autres pour former l'empilement. Au moins deux feuilles comportent chacune une languette solidaire de la partie commune de ladite feuille, et en ce que pour deux feuilles successives comportant une languette, les deux languettes sont décalées l'une par rapport à l'autre lorsqu'elles sont vues selon la direction d'empilement. La cale pelable est caractérisée en ce que toutes les x feuilles, où *x* ≥ 2, lesdites feuilles présentent une languette d'une première forme et les feuilles, intermédiaires entre les feuilles présentant une languette de la première forme, présentent une languette d'une deuxième forme différente de la première forme.

Une telle cale pelable facilite une bonne prise en main de la languette et donc l'arrachage de la feuille et facilite la visibilité du nombre de feuilles à arracher.

Avantageusement, la partie commune de la feuille prend la forme d'une rondelle et chaque languette prend la forme d'une demi-ellipse solidaire de la périphérie de la rondelle par son petit axe.

Selon un mode de réalisation particulier, la longueur du petit axe est inférieure au diamètre de la rondelle.

Selon un autre mode de réalisation particulier, la longueur du petit axe est égale au diamètre de la rondelle.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue en perspective d'une cale pelable selon un premier mode de réalisation de l'invention,
la Fig. 2 est une vue en perspective d'une cale pelable selon un deuxième mode de réalisation de l'invention
la Fig. 3 montre une vue de dessus d'une cale pelable selon un troisième mode de réalisation de l'invention, et
la Fig. 4 montre une vue de dessus d'une cale pelable selon un quatrième mode de réalisation de l'invention.

### EXPOSE DETAILLE DE MODES DE REALISATION

Dans la description qui suit, la forme de chaque cale pelable est donnée à titre d'exemple. Chaque cale peut ainsi être pleine ou percée d'un ou plusieurs trous. Chaque cale peut également présenter un contour rectangulaire, circulaire ou quelconque. De la même manière, le nombre de feuilles constituant chaque cale pelable ainsi que l'épaisseur de chaque feuille peuvent varier. De la même manière, chaque feuille peut être en métal ou en tout autre matériau.

La Fig. 1 montre une cale pelable 100 selon un premier mode de réalisation et qui est constituée d'un empilement de plusieurs feuilles 102a-e. Chaque feuille 102a-e comporte une partie commune 104 et les parties communes 104 sont collées les unes sur les autres afin de former l'empilement.

L'empilement s'effectue selon une direction d'empilement Z qui est normal au plan de chaque feuille 102a-e.

Chaque feuille 102a-e comporte une languette 106a-b qui est solidaire de la partie commune 104 de ladite feuille 102a-e.

Pour chaque feuille 102a-e, la languette 106a-b est déportée par rapport à la partie commune 104 de ladite feuille 102a-e afin de permettre de dégager la languette 106a-b de la partie commune 104.

Pour deux feuilles successives 102a-e, c'est-à-dire collées l'une à l'autre, et comportant une languette 106a-b, les deux languettes 106a-b sont décalées l'une par rapport à l'autre lorsqu'elles sont vues selon la direction d'empilement Z, c'est-à-dire parallèlement à la direction d'empilement Z.

On dit que deux languettes 106a-b sont décalées l'une par rapport à l'autre lorsqu'elles ne se recouvrent pas entièrement selon la direction d'empilement Z.

Le décalage ainsi produit constitue une aide à la prise en main des languettes 106a-b lors de l'arrachage successif des feuilles 102a-e.

Comme le montre la Fig. 1, les languettes 106a-b de deux feuilles 102a-e successives sont décalées lorsqu'elles sont vues selon la direction d'empilement Z, alors que les languettes 106a-b des feuilles 102a et 102e ne sont pas décalées lorsqu'elles sont vues selon la direction d'empilement Z mais distante l'une de l'autre parallèlement à la direction d'empilement Z.

La Fig. 2 montre une cale pelable 200 selon un deuxième mode de réalisation de l'invention et qui est également constituée d'un empilement de feuilles 202a-e, comportant chacune une partie commune 204. La différence entre la cale pelable 100 du premier mode de réalisation et la cale pelable 200 du deuxième mode de réalisation réside dans le nombre de languettes 206 présentes dans la cale pelable 200.

Dans le premier mode de réalisation de l'invention de la Fig. 1, chaque feuille 102a-e présente une languette 106a-b.

Dans le deuxième mode de réalisation de l'invention de la Fig. 2, pour chaque paire de feuilles 202a-e successives, il y a au maximum une feuille 202a, 202e qui présente une languette 206. En d'autres termes, pour deux feuilles 202a-e successives, au moins une ne présente pas de languette 206. Il n'est alors pas forcément nécessaire de décaler les languettes 206 puisqu'elles sont distantes l'une de l'autre d'au moins l'épaisseur d'une partie commune 204, et qu'il y a donc, entre elles, un espace où un outil peut être introduit.

Ainsi, d'une manière plus générale, pour la cale pelable 100, 200, au moins deux feuilles 102a-e, 202a-e comportent chacune une languette 106a-b, 206 solidaire de la partie commune 104, 204 de ladite feuille 102a-e, 202a-e, et pour deux feuilles 104a-e successives comportant une languette 106a-b, les deux languettes 106a-b sont décalées l'une par rapport à l'autre lorsqu'elles sont vues selon la direction d'empilement Z.

Un tel arrangement de languettes facilite donc la prise en main pour l'arrachage et il est possible d'arracher plusieurs feuilles en même temps et non plus une par une comme dans l'état de la technique.

Dans le mode de réalisation de la Fig. 1, les languettes 106a-b ont des formes différentes, à savoir des languettes 106a d'une première forme et des languettes 106b d'une deuxième forme. Ici la première forme est rectangulaire et la deuxième forme est triangulaire. Toutes les x ( *x* ≥ 2) feuilles 102a et 102e (ici x = 4), lesdites feuilles 102a et 102e présentent une languette 106a de la première forme et les feuilles 102bd, intermédiaires entre les feuilles 102a et 102e présentant une languette 106a de la première forme, présentent une languette 106b de la deuxième forme.

La première forme et la deuxième forme sont différentes afin d'améliorer la visibilité du nombre de feuilles à arracher pour le technicien.

Ainsi, il est possible de saisir une languette 106a de la première forme pour enlever x feuilles d'un coup, ou de saisir une languette 106b de la deuxième forme pour enlever une feuille.

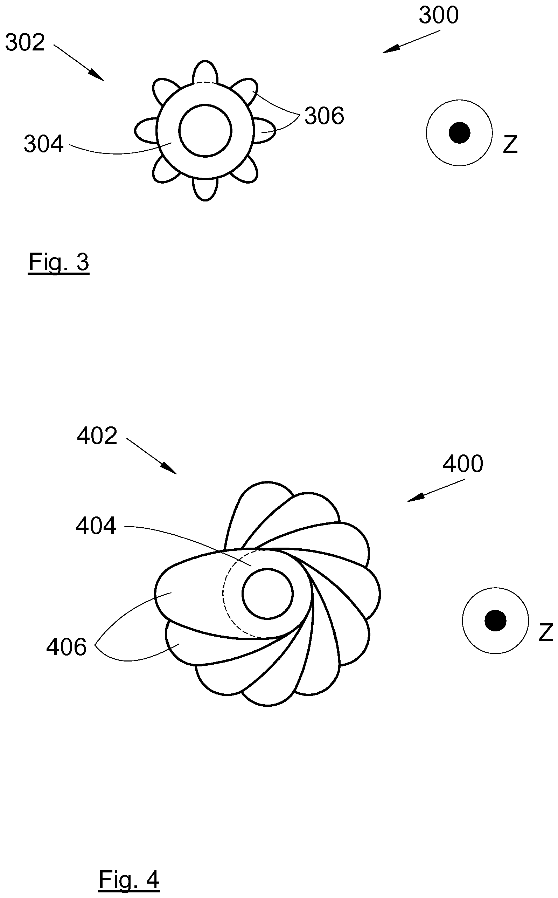

La Fig. 3 montre une cale pelable 300 selon un troisième mode de réalisation de l'invention qui est constituée d'un empilement de feuilles 302, chacune comportant une partie commune 304 et où au moins deux feuilles 302 comportent une languette 306.

Dans les premier et deuxième modes de réalisation, la partie commune 104, 204 est rectangulaire, tandis que dans le troisième mode de réalisation de la Fig. 3, la partie commune 304 est prend la forme d'une rondelle. Chaque languette 306 prend la forme d'une demi-ellipse solidaire de la périphérie de la rondelle par son petit axe. La longueur du petit axe est inférieure au diamètre de la rondelle ce qui permet de décaler les languettes 306 les unes des autres.

La Fig. 4 montre une cale pelable 400 selon un quatrième mode de réalisation de l'invention qui est constituée d'un empilement de feuilles 402, chacune comportant une partie commune 404 et où au moins deux feuilles 402 comportent une languette 406.

Dans ce mode de réalisation, la partie commune 404 prend également la forme d'une rondelle, la languette 406 prend la forme d'une demi-ellipse solidaire de la périphérie de la rondelle par son petit axe. La longueur du petit axe est égale au diamètre de la rondelle ce qui permet une superposition au moins partielle des languettes 406.

Bien sûr, les variantes des premier et deuxième modes de réalisation peuvent s'appliquer aux troisième et quatrième modes de réalisation.

## Revendications

1. Cale pelable (100, 200, 300, 400) constituée d'un empilement de plusieurs feuilles (102a-e, 202a-e, 302, 402) selon une direction d'empilement (Z), chaque feuille (102a-e, 202a-e, 302, 402) comportant une partie commune (104, 204, 304, 404) où les parties communes (104, 204, 304, 404) sont collées les unes sur les autres pour former l'empilement, au moins deux feuilles (102a-e, 202a-e, 302, 402) comportent chacune une languette (106a-b, 206, 306, 406) solidaire de la partie commune (104, 204, 304, 404) de ladite feuille (102a-e, 202a-e, 302, 402), et pour deux feuilles (104a-d, 304, 404) successives comportant une languette (106a-b, 306, 406), les deux languettes (106a-b, 306, 406) sont décalées l'une par rapport à l'autre lorsqu'elles sont vues selon la direction d'empilement (Z), la cale pelable étant **caractérisée en ce que** toutes les x feuilles (102a, 102e), où *x* ≥ 2, lesdites feuilles (102a, 102e) présentent une languette (106a) d'une première forme et les feuilles (102b-d), intermédiaires entre les feuilles (102a, 102e) présentant une languette (106a) de la première forme, présentent une languette (106b) d'une deuxième forme différente de la première forme.

2. Cale pelable (300, 400) selon la revendication 1, **caractérisée en ce que** la partie commune (304, 404) de la feuille (302, 402) prend la forme d'une rondelle et **en ce que** chaque languette (306, 406) prend la forme d'une demi-ellipse solidaire de la périphérie de la rondelle par son petit axe.

3. Cale pelable (300) selon la revendication 2, **caractérisée en ce que** la longueur du petit axe est inférieure au diamètre de la rondelle.

4. Cale pelable (400) selon la revendication 2, **caractérisée en ce que** la longueur du petit axe est égale au diamètre de la rondelle.

## Patentansprüche

1. Abziehbare Zwischenlage (100, 200, 300, 400), welche aus einem Stapel von mehreren Folien (102a-e, 202a-e, 302, 402) gemäß einer Stapelrichtung (Z) besteht, wobei jede Folie (102a-e, 202a-e, 302, 402) einen gemeinsamen Abschnitt (104, 204, 304, 404) umfasst, an dem die gemeinsamen Abschnitte (104, 204, 304, 404) aufeinander verklebt sind, um den Stapel zu bilden, mindestens zwei Folien (102a-e, 202a-e, 302, 402) umfassen jeweils eine Zunge (106a-b, 206, 306, 406), welche fest mit dem gemeinsamen Abschnitt (104, 204, 304, 404) der Folie (102a-e, 202a-e, 302, 402) verbunden ist, und für zwei aufeinander folgende Folien (104a-d, 304, 404), welche eine Zunge (106a-b, 306, 406) umfassen, sind die beiden Zungen (106a-b, 306, 406) zueinander versetzt, wenn sie gemäß der Stapelrichtung (Z) gesehen werden, wobei die abziehbare Zwischenlage **dadurch gekennzeichnet ist, dass** sämtliche x Folien (102a, 102e), wo x≥2, die Folien (102a, 102e) eine Zunge (106a) mit einer ersten Form und die zwischen den eine Zunge (106a) der ersten Form aufweisenden Folien (102a, 102e) zwischenliegenden Folien (102b-d) eine Zunge (106b) einer zweiten, von der ersten Form verschiedenen Form aufweisen.

2. Abziehbare Zwischenlage (300, 400) nach Anspruch 1, **dadurch gekennzeichnet, dass** der gemeinsame Abschnitt (304, 404) der Folie (302, 402) die Form einer Unterlegscheibe annimmt und dass jede Zunge (306, 406) die Form einer Halbellipse annimmt, welche fest mit dem Umfang der Unterlegscheibe über ihre kurze Achse befestigt ist.

3. Abziehbare Zwischenlage (300) nach Anspruch 2, **dadurch gekennzeichnet, dass** die Länge der kurzen Achse kleiner als der Durchmesser der Unterlegscheibe ist.

4. Abziehbare Zwischenlage (400) nach Anspruch 2, **dadurch gekennzeichnet, dass** die Länge der kurzen Achse gleich dem Durchmesser der Unterlegscheibe ist.

## Claims

1. Peelable wedge (100, 200, 300, 400), constituted by a plurality of sheets
(102a-e, 202a-e, 302, 402) stacked according to a direction of stacking (Z), each sheet (102a-e, 202a-e, 302, 402) comprising a common part (104, 204, 304, 404) wherein the common parts (104, 204, 304, 404) are glued to one another in order to form the stack, at least two sheets (102a-e, 202a-e, 302, 402) each comprise a tab (106a-b, 206, 306, 406) which is integral with the common part (104, 204, 304, 404) of the said sheet (102a-e, 202a-e, 302, 402), and for two successive sheets (104a-d, 304, 404) comprising a tab (106a-b, 306, 406), the two tabs (106a-b, 306, 406) are offset relative to one another when they are seen according to the direction of stacking (Z), the peelable wedge (100, 200, 300, 400) being **characterized in that** every x sheets (102a, 102e), where x ≥ 2, the said sheets (102a, 102e) have a tab (106a) with a first form, and the intermediate sheets (102b-d) between the sheets (102a, 102e) having a tab (106a) with the first form, have a tab (106b) with a second form which is different from the first form.

2. Peelable wedge (300, 400) according to Claim 1, **characterized in that** the common part (304, 404) of the sheet (302, 402) is in the form of a washer, and **in that** each tab (306, 406) is in the form of a half-ellipse which is integral with the periphery of the washer via its small axis.

3. Peelable wedge (300) according to Claim 2, **characterized in that** the length of the small axis is smaller than the diameter of the washer.

4. Peelable wedge (400) according to Claim 2, **characterized in that** the length of the small axis is equal to the diameter of the washer.
